# EUROPÄISCHE PATENTSCHRIFT

(11) **EP 3 344 578 B1**
(45) Veröffentlichungstag und Bekanntmachung des Hinweises auf die Patenterteilung: **04.11.2020**
(21) Anmeldenummer: 16759776.4
(22) Anmeldetag: 01.09.2016
(51) Int. Cl.: C01B 17/765, C01B 17/79

(54) **VERFAHREN UND VORRICHTUNG ZUR HERSTELLUNG VON SCHWEFELSÄURE**
METHOD AND DEVICE FOR PRODUCING SULFURIC ACID
PROCÉDÉ ET DISPOSITIF DE PRÉPARATION D'ACIDE SULFURIQUE

(30) Priorität: 04.09.2015 DE 102015114871
(43) Veröffentlichungstag der Anmeldung: 11.07.2018
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); GUETTA, Zion, 44309 Dortmund (DE)
(74) Vertreter: thyssenkrupp Intellectual Property GmbH
(86) Internationale Anmeldenummer: PCT/EP2016/070605
(87) Internationale Veröffentlichungsnummer: WO 2017/037167

(56) Entgegenhaltungen:
- DE-A1- 3 713 219
- DE-T2- 69 813 528
- DATABASE WPI Week 197722 Thomson Scientific, London, GB; AN 1977-39144Y XP002764449, & JP S52 50992 A (MITSUBISHI KAKOKI) 23. April 1977 (1977-04-23)

## Beschreibung

Die Erfindung betrifft ein Verfahren zur Herstellung von Schwefelsäure, wobei Schwefel in einer ersten Oxidationsstufe zu Schwefeldioxid oxidiert wird, und wobei Schwefeldioxid in einer zweiten Oxidationsstufe katalytisch zu Schwefeltrioxid oxidiert wird und wobei das Schwefeltrioxid in zumindest einer Absorptionsstufe absorbiert wird, so dass Schwefelsäure erhalten wird. Die Erfindung betrifft fernerhin eine Vorrichtung zur Durchführung dieses Verfahrens. - Im Rahmen der Erfindung wird Schwefelsäure mittels des Kontaktverfahrens bzw. Doppelkontaktverfahrens hergestellt. Die Schwefelsäure kann beispielsweise zur Erzeugung von phosphathaltigen Düngemitteln oder auch zu anderen Anwendungszwecken eingesetzt werden.

Verfahren der vorstehend erläuterten Art sowie Vorrichtungen zur Durchführung dieser Verfahren sind aus der Praxis in unterschiedlichen Ausführungsformen bekannt. Bei dieser Herstellung bzw. großtechnischen Herstellung von Schwefelsäure findet eine katalytische Oxidation von Schwefeldioxid zu Schwefeltrioxid statt. Dabei wird in der Regel Vanadiumpentoxid (V₂O₅) als Katalysator eingesetzt. Derartige Katalysatoren sind erst ab bestimmten höheren Temperaturen aktiv. So ist Vanadiumpentoxid erst ab einer Temperatur von etwa 410 °C aktiv. Bei bestimmten Anlässen - beispielsweise für eine Wartung der Vorrichtung - muss die Produktion der Schwefelsäure unterbrochen werden. Nichtsdestoweniger soll die Vorrichtung bei einem solchen Produktionsstopp warmgehalten werden, um insbesondere Kondensationen von Schwefelsäure und daraus resultierende Korrosionen zu vermeiden. Fernerhin muss beim Anfahren einer solchen Vorrichtung der Katalysator zunächst auf die erforderliche Aktivierungstemperatur aufgeheizt werden.

Aus dem Stand der Technik ist es bekannt, eine solche Vorrichtung während eines Produktionsstopps sowie beim Anfahren der Vorrichtung mit aufgeheizter und getrockneter Atmosphärenluft warmzuhalten bzw. zu erwärmen. Dabei wird feuchte Atmosphärenluft aus der Umgebung unter Zuhilfenahme von konzentrierter Schwefelsäure getrocknet. Hierzu müssen in nachteilhafter Weise relativ große Mengen konzentrierter Schwefelsäure vorgehalten werden und dafür sind entsprechend große Schwefelsäure-Tanks erforderlich. Um Korrosionen zu vermeiden darf die für die Lufttrocknung eingesetzte Schwefelsäure eine Konzentration ca. 93 % nicht unterschreiten. Die Einhaltung dieser Grenze ist häufig problematisch. Falls Feuchtigkeit bzw. feuchte Atmosphärenluft in die Vorrichtung eindringt, bildet das entsprechende Wasser mit in den Vorrichtungskomponenten vorhandenem Schwefeltrioxid Schwefelsäure bzw. verdünnte Schwefelsäure und die Folge können erhebliche Korrosionen sein, die zumindest langfristig die Brauchbarkeit von Vorrichtungskomponenten in Frage stellen können.

In der DE 698 13 528 T2 ist eine Vorrichtung und ein Verfahren zur Herstellung von Schwefeltrioxid (SO3) unter Verwendung eines Schwefelbrenners zur Herstellung von Schwefeldioxid (SO2) und eines Katalysators zur Umwandlung des SO2 in SO3 beschrieben. Der katalytische Konverter umfasst einen Behälter, der eine Vielzahl von voneinander beabstandeten Kanälen enthält, von denen jeder ein stromaufwärtiges Ende, das mit einem stromaufwärtigen Verteiler in Verbindung steht, und ein stromabwärtiges Ende, das mit einem stromabwärtigen Verteiler in Verbindung steht, aufweist. Jeder Kanal umfasst eine einzige, kontinuierliche, ununterbrochene Konversionsstufe, die am stromabwärtigen Kanalende endet. Eine erste Mischung aus SO2 und Luft aus dem Schwefelbrenner wird in den stromaufwärtigen Verteiler eingeführt und strömt als Strom durch jeden der Kanäle, wo der Strom gekühlt und das SO2 in der Umwandlungsstufe in SO3 umgewandelt wird, um am stromabwärtigen Kanalende eine zweite Mischung zu erzeugen, die im Wesentlichen aus SO3 und Luft besteht. Der durch die Konversionsstufe fließende Strom wird auf einer Temperatur gehalten, welche die Umwandlung von SO2 in SO3 aufrechterhält, ohne den Strom mit einem Kühlfluid zu verdünnen oder den Strom aus dem im Konvertergefäß enthaltenen Kanal umzuleiten.

Demgegenüber liegt der Erfindung das technische Problem zugrunde, ein Verfahren der eingangs genannten Art anzugeben, mit dem ein Aufheizen bzw. Warmhalten der Strömungswege und der Komponenten der betreffenden Vorrichtung auf einfache und wenig aufwendige Weise realisiert werden kann und bei dem die vorstehend geschilderten Nachteile vermieden werden können. Der Erfindung liegt weiterhin das technische Problem zugrunde, eine entsprechende Vorrichtung zur Durchführung dieses Verfahrens anzugeben.

Zur Lösung des technischen Problems lehrt die Erfindung ein Verfahren zur Herstellung von Schwefelsäure, wobei in einem Produktionsmodus des Verfahrens Schwefel in einer ersten Oxidationsstufe zu Schwefeldioxid oxidiert wird, wobei das Schwefeldioxid in einer zweiten Oxidationsstufe katalytisch zu Schwefeltrioxid oxidiert wird und wobei das Schwefeltrioxid in zumindest eine Absorptionsstufe zur Absorption des Schwefeltrioxids eingeleitet wird, wobei Prozessgase aus der in Strömungsrichtung letzten Absorptionsstufe ausgeschleust werden,
wobei in einem Standby-Modus des Verfahrens zumindest eine in Strömungsrichtung der Prozessgase vor der zweiten Oxidationsstufe angeordnete Er wärmungsstufe zur Erwärmung der Prozessgase zugeschaltet wird, wobei die aus der Absorptionsstufe austretenden Prozessgase zu der Erwärmungsstufegeleitet bzw. zurückgeleitet werden und wobei das Prozessgas über die Erwärmungsstufe, die zweite Oxidationsstufe und die zumindest eine Absorptionsstufe im Kreislauf geführt wird.

Erfindungsgemäß wird das in der Vorrichtung befindliche Prozessgas im Standby-Modus umgewälzt bzw. im Kreislauf geführt und die externe Zufuhr von Atmosphärenluft bzw. getrockneter Atmosphärenluft ist grundsätzlich nicht notwendig. Das in der Anlage befindliche Gas bzw. Prozessgas wird zumindest über die Erwärmungsstufe, die zweite Oxidationsstufe und die zumindest eine Absorptionsstufe im Kreislauf geführt. Es liegt prinzipiell im Rahmen der Erfindung, dass das Prozessgas sukzessive durch Stickstoff bzw. durch technischen Stickstoff ersetzt werden kann.

Standby-Modus meint im Rahmen der Erfindung insbesondere eine Unterbringung der Schwefelsäure-Produktion und somit einen Produktionsstopp, bei dem die Vorrichtung/Anlage und vor allem auch der Katalysator in der zweiten Oxidationsstufe warmgehalten werden muss. Hierzu trägt effektiv die erfindungsgemäße Erwärmungsstufe bei. Standby-Modus meint nach empfohlener Ausführungsform der Erfindung aber auch einen Anfahrvorgang und/oder einen Abfahrvorgang für die erfindungsgemäße Vorrichtung, bei welchen Vorgängen prinzipiell die gleichen Bedingungen gelten wie im Standby-Modus bei einem Produktionsstopp der Anlage. Gemäß einer bevorzugten Ausführungsvariante der Erfindung wird bei einem Anfahrvorgang bzw. bei einem Abfahrvorgang der Vorrichtung im Unterschied zum Produktionsstopp lediglich das Prozessgas in der Erwärmungsstufe sukzessive bzw. stufenweise aufgewärmt bzw. abgekühlt.

Im Standby-Modus bzw. im Warmhaltebetrieb der Vorrichtung hält das heiße Prozessgas Anlagenkomponenten über dem Taupunkt von Schwefelsäure und außerdem wird zweckmäßigerweise die Temperatur in der zweiten Oxidationsstufe über der Aktivierungstemperatur des Katalysators gehalten. Es liegt im Rahmen der Erfindung, dass im Standby-Modus Gas aus der zweiten Oxidationsstufe im Wesentlichen aus Stickstoff (N₂), aus Sauerstoff (O₂) und
aus Spuren von Schwefeldioxid (SO₂), Schwefeltrioxid (SO₃) und Wasser (H₂O) besteht. Weiterhin liegt es im Rahmen der Erfindung, dass in der Absorptionsstufe bzw. in der End-Absorptionsstufe aus dem Prozessgas SO₃ und Wasser absorbiert werden, damit in der Anlage keine Kondensation von SO₃ und Wasser in Form von Schwefelsäure erfolgt.

Vorzugsweise werden im Produktionsmodus des Verfahrens der ersten Oxidationsstufe Schwefel und Luft für die Oxidation bzw. für die Verbrennung des Schwefels zugeführt. Zweckmäßigerweise wird dabei die Luft über zumindest eine Trocknungseinrichtung - bevorzugt in Form eines Trocknungsturms - in die erste Oxidationsstufe eingeführt. Es liegt im Rahmen der Erfindung, dass im Standby-Modus des Verfahrens die Schwefelzufuhr zu der ersten Oxidationsstufe eingestellt wird und dass die Luftzufuhr zu der ersten Oxidationsstufe zumindest gedrosselt wird, vorzugsweise aber eingestellt wird bzw. im Wesentlichen eingestellt wird. Gemäß einer Ausführungsvariante wird die Luftzufuhr mittels eines vor der Trocknungseinrichtung angeordneten Absperrelementes gedrosselt und bevorzugt unterbrochen.

Erfindungsgemäß wird beim Standby-Modus des Verfahrens im Vergleich zum Produktionsmodus die zumindest eine Erwärmungsstufe zugeschaltet. Gemäß besonders empfohlener Ausführungsform des erfindungsgemäßen Verfahrens werden im Standby-Modus die Prozessgase von der in Strömungsrichtung letzten Absorptionsstufe bzw. von der End-Absorptionsstufe unter Umgehung der ersten Oxidationsstufe zur Erwärmungsstufe geführt und von dort zur zweiten Oxidationsstufe geleitet. In der Erwärmungsstufe werden die Prozessgase erhitzt und zwar vorzugsweise auf eine Temperatur zwischen 400 °C und 600 °C, beispielsweise auf eine Temperatur von etwa 500 °C erwärmt.

Eine besonders bevorzugte Ausführungsform der Erfindung ist dadurch gekennzeichnet, dass die zweite Oxidationsstufe mehrteilig bzw. mehrstufig ausgeführt ist. Zweckmäßigerweise werden die Prozessgase nach Durchlaufen eines ersten Teils der zweiten Oxidationsstufe aus der zweiten Oxidationsstufe ausgeschleust, und zwar bevorzugt sowohl im Produktionsmodus als auch im

Standby-Modus des Verfahrens. Im Produktionsmodus des Verfahrens werden die aus der zweiten Oxidationsstufe ausgeschleusten Prozessgase durch zumindest eine, vorzugsweise eine Zwischen-Absorptionsstufe geführt sowie anschließend zur zweiten Oxidationsstufe zurückgeführt, wo sie dann einen zweiten Teil der zweiten Oxidationsstufe durchlaufen. Es empfiehlt sich, dass in der Zwischen-Absorptionsstufe Schwefeltrioxid aus den Prozessgasen absorbiert wird. Zweckmäßigerweise werden dazu die Prozessgase in der Zwischen-Absorptionsstufe im Gegenstrom zu einem Fluid, vorzugsweise im Gegenstrom zu verdünnter Schwefelsäure - beispielsweise 98,5 %iger Schwefelsäure - geführt. Durch die Absorption des Schwefeltrioxids wird diese Schwefelsäure aufkonzentriert und somit kann konzentrierte Schwefelsäure aus dem Sumpf der Zwischen-Absorptionsstufe entnommen werden. Das aus der Zwischen-Absorptionsstufe wieder austretende schwefeldioxidhaltige Prozessgas wird zur zweiten Oxidationsstufe zurückgeführt und dort durch einen zweiten Teil der zweiten Oxidationsstufe geleitet. - Vorzugsweise werden dagegen im Standby-Modus des Verfahrens die aus der zweiten Oxidationsstufe bzw. die nach Durchlaufen des ersten Teils der zweiten Oxidationsstufe ausgeschleusten Prozessgase über eine verschließbare Bypass-Leitung unter Umgehung der zumindest einen Zwischen-Absorptionsstufe zu der zweiten Oxidationsstufe zurückgeführt. Hier können dann die über die Bypass-Leitung wieder zurückgeführten Prozessgase durch den zweiten Teil der zweiten Oxidationsstufe strömen. Die Bypass-Leitung ist empfohlenermaßen unter Zuhilfenahme zumindest eines Absperrelementes verschließbar. Somit kann zur Einstellung des Produktionsmodus dieses Absperrelement in der Bypass-Leitung geschlossen werden und zur Einstellung des Standby-Modus wird dieses Absperrelement in der Bypass-Leitung geöffnet.

Es liegt im Rahmen der Erfindung, dass die Prozessgase sowohl im Produktionsmodus als auch im Standby-Modus des Verfahrens nach Durchlaufen des zweiten Teils der zweiten Oxidationsstufe in die zumindest eine Absorptionsstufe bzw. in die End-Absorptionsstufe eingeführt werden. Zweckmäßigerweise wird im Standby-Modus des Verfahrens die Ausschleusung der Prozessgase aus der in Strömungsrichtung letzten Absorptionsstufe bzw. aus der End-Absorptionsstufe zumindest gedrosselt, vorzugsweise aber unterbunden. Die Prozessgase werden stattdessen erfindungsgemäß in die Erwärmungsstufe eingeführt und dort erwärmt.

Zur Lösung des technischen Problems lehrt die Erfindung weiterhin eine Vorrichtung zur Herstellung von Schwefelsäure, wobei eine erste Oxidationseinrichtung für die Erzeugung von Schwefeldioxid sowie eine daran angeschlossene zweite Oxidationseinrichtung zur Oxidation des Schwefeldioxids zu Schwefeltrioxid vorgesehen ist, wobei an die zweite Oxidationseinrichtung zumindest eine Absorptionsvorrichtung - insbesondere zumindest ein Absorptionsturm - für die Absorption des Schwefeltrioxids angeschlossen ist, wobei die in Strömungsrichtung des Prozessgases letzte Absorptionsvorrichtung (End-Absorptionsvorrichtung bzw. End-Absorptionsturm) für das aus der Absorptionsvorrichtung abgeführte Prozessgas zumindest eine verschließbare Ausschleusungsleitung sowie zumindest eine verschließbare Prozessgasleitung aufweist,
wobei in dem Produktionsmodus der Vorrichtung die Ausschleusungsleitung geöffnet und die Prozessgasleitung geschlossen ist, so dass Prozessgas aus der Vorrichtung ausgeschleust wird und wobei im Standby-Modus der Vorrichtung die Ausschleusungsleitung verschlossen und die Prozessgasleitung für eine Kreislaufführung des Prozessgases geöffnet ist. Die Prozessgasleitung ist mit einer Erwärmungseinrichtung (Erwärmungsstufe) zur Erwärmung des Prozessgases verbunden und die Erwärmungseinrichtung ist über eine Anschlussleitung an die zweite Oxidationseinrichtung angeschlossen. Im Standby-Modus der Vorrichtung wird das erwärmte Prozessgas aus der Erwärmungseinrichtung in die zweite Oxidationseinrichtung eingeführt. Fernerhin wird im Standby-Modus der Vorrichtung das Prozessgas zumindest über die Erwärmungseinrichtung, die zweite Oxidationseinrichtung und die zumindest eine Absorptionsvorrichtung (End-Absorptionsvorrichtung) im Kreislauf geführt.

Gemäß bevorzugter Ausführungsform der erfindungsgemäßen Vorrichtung ist zumindest ein Gebläse vorgesehen, wobei im Produktionsmodus der Vorrichtung mit diesem Gebläse der ersten Oxidationseinrichtung Sauerstoff bzw. Luft zur Oxidation des Schwefels zuführbar ist. Empfohlenermaßen wird im Standby-Modus stattdessen mit diesem Gebläse Prozessgas aus der Prozessgasleitung zu der Erwärmungseinrichtung gefördert. Insoweit kann das zumindest eine Gebläse sowohl im Produktionsmodus als auch im Standby-Modus aktiv eingesetzt werden. Im Produktionsmodus wird unter Zuhilfenahme des Gebläses vorzugsweise Luft zu der ersten Oxidationseinrichtung hin gefördert. Es wurde oben bereits dargelegt, dass im Produktionsmodus Schwefel mit Hilfe des Luftsauerstoffs in der ersten Oxidationseinrichtung oxidiert bzw. verbrannt wird. Zweckmäßigerweise ist die erste Oxidationseinrichtung als Brennkammer ausgebildet. - Vorzugsweise wird im Standby-Modus die erste Oxidationseinrichtung bei der Prozessgasführung umgangen und das Prozessgas wird bevorzugt unter Zuhilfenahme des Gebläses von der End-Absorptionsvorrichtung zur Erwärmungseinrichtung hin gefördert. Von der Erwärmungseinrichtung aus wird das Prozessgas im Standby-Modus in die zweite Oxidationseinrichtung eingeführt.

Es liegt im Rahmen der Erfindung, dass die zweite Oxidationseinrichtung als mehrstufiger Konverter, insbesondere als zweistufiger Konverter ausgebildet ist. Weiterhin liegt es im Rahmen der Erfindung, dass jede Konverterstufe zumindest einen Katalysatorboden, bevorzugt eine Mehrzahl von Katalysatorböden aufweist. Zweckmäßigerweise ist eine erste Konverterstufe über eine Prozessgas-Abführungsleitung mit einer Zwischen-Absorptionseinrichtung verbunden und die Zwischen-Absorptionseinrichtung ist wiederum über eine Prozessgas-Zuführungsleitung mit einer zweiten Konverterstufe verbunden. Dadurch ist im Produktionsmodus der Vorrichtung Prozessgas aus der ersten Konverterstufe durch die Zwischen-Absorptionseinrichtung in die zweite Konverterstufe der zweiten Oxidationseinrichtung einführbar. In der ersten Konverterstufe wird ein Teil des in die zweite Oxidationseinrichtung eingeführten Schwefeldioxids zu Schwefeltrioxid oxidiert und in der Zwischen-Absorptions einrichtung wird das SO₃-haltige Prozessgas bevorzugt im Gegenstrom zu einem fluiden Medium, vorzugsweise zu verdünnter Schwefelsäure - beispielsweise 98,5 %iger Schwefelsäure - geführt. Das Schwefeltrioxid wird von der Schwefelsäure absorbiert, so dass die Schwefelsäure in der Zwischen-Absorptionseinrichtung gleichsam aufkonzentriert wird. Das verbleibende Prozessgas wird im Produktionsmodus aus der Zwischen-Absorptionseinrichtung über die Prozessgas-Zuführungsleitung in den Konverter zurückgeführt und durchströmt dann die zweite Konverterstufe der zweiten Oxidationseinrichtung.

Gemäß besonders bevorzugter Ausführungsform der Erfindung sind die Prozessgas-Abführungsleitung und die Prozessgas-Zuführungsleitung über zumindest eine verschließbare Bypass-Leitung miteinander verbunden. Dabei ist die Bypass-Leitung zweckmäßigerweise über zumindest ein Absperrelement, beispielsweise ein Ventil (Bypass-Ventil), verschließbar. Im Produktionsmodus ist die Bypass-Leitung verschlossen. Im Standby-Modus der Vorrichtung ist dagegen die Bypass-Leitung geöffnet, so dass Prozessgas aus der ersten Konverterstufe über die Bypass-Leitung - unter Umgehung der Zwischen-Absorptionseinrichtung - in die zweite Konverterstufe der zweiten Oxidationseinrichtung einführbar ist. Dadurch werden im Standby-Modus - insbesondere bei einem Warmhaltevorgang der Vorrichtung - Wärmeverluste in der Zwischen-Absorptionseinrichtung verm ieden.

Der Erfindung liegt die Erkenntnis zugrunde, dass bei dem erfindungsgemäßen Verfahren bzw. in der erfindungsgemäßen Vorrichtung durch Umwälzung des ohnehin in der Vorrichtung vorhandenen Prozessgases ein einfacher und wenig aufwendiger Standby-Modus realisiert werden kann. Bei einem zwischenzeitlichen Warmhaltebetrieb der Vorrichtung - beispielsweise aufgrund von Wartungen oder Reparaturen - sowie beim Anfahren (Aufheizen) oder Abfahren (Abkühlen) der Vorrichtung ist eine externe Luftzufuhr grundsätzlich nicht erforderlich und somit ergibt sich auch keine externe Feuchtigkeitsquelle, die durch Trocknung kompensiert werden müsste. Durch eine relativ einfache Konfiguration des Gasweges des Prozessgases kann ohne Probleme eine korrosionsfreie Prozessgas-Zirkulation während des Standby-Modus verwirklicht werden. Durch das effektive und funktionssichere Warmhalten der Vorrichtungskomponenten - insbesondere mit Hilfe der Erwärmungsstufe bzw. der Erwärmungseinrichtung - kann die Kondensation von Schwefelsäure in den Vorrichtungskomponenten wirksam verhindert werden und somit auch die daraus resultierenden Korrosionen. Im Warmhaltebetrieb bleibt eine optimale Aktivierung der Katalysatoren gewährleistet und eine Beibehaltung der Aktivierungstemperatur ist problemlos möglich. Im Vergleich zu den eingangs erläuterten aus dem Stand der Technik bekannten Maßnahmen werden verhältnismäßig große Mengen von konzentrierter Schwefelsäure zur Trocknung eingespart und somit werden auch entsprechend große Schwefelsäure-Tanks überflüssig. Im Ergebnis zeichnet sich das erfindungsgemäße Verfahren und die erfindungsgemäße Vorrichtung durch einen einfachen und wenig aufwendigen Betrieb aus, wobei Emissionen weitgehend minimiert werden und im Übrigen im Vergleich zu den aus dem Stand der Technik bekannten Verfahren die Gesamtkosten deutlich reduziert werden können. Dies auch deshalb, weil das erfindungsgemäße Verfahren zudem in energietechnischer Hinsicht vorteilhaft geführt werden kann.

Nachfolgend wird die Erfindung anhand einer lediglich ein Ausführungsbeispiel darstellenden Zeichnung näher erläutert. Die Figuren zeigen in schematischer Darstellung:
- Fig. 1: ein Schaltbild einer erfindungsgemäßen Vorrichtung zur Durchführung des erfindungsgemäßen Verfahrens und
- Fig. 2: den Gegenstand nach Fig. 1 in einer abgewandelten Ausführungsform.

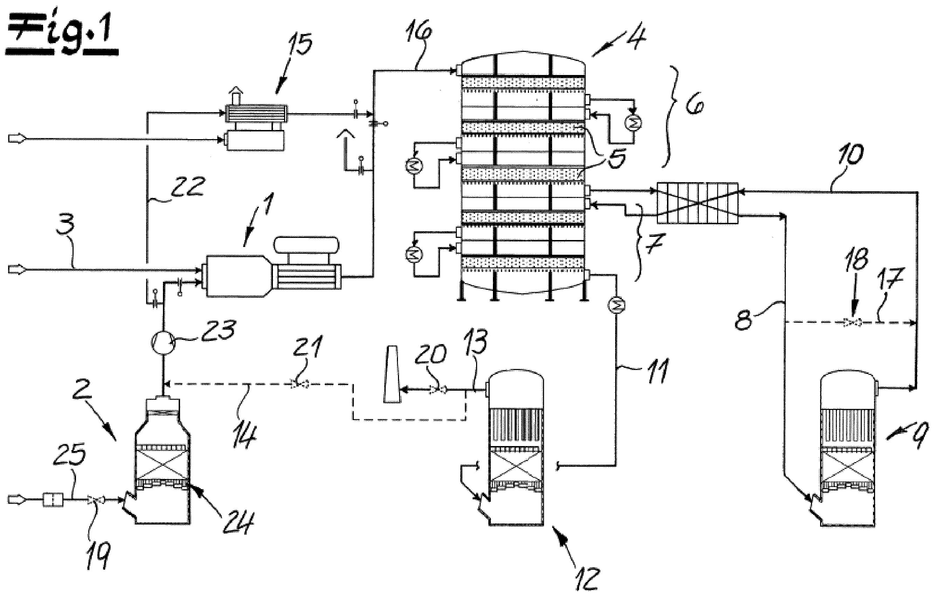

Die Figuren zeigen schematisch ein Schaltbild einer erfindungsgemäßen Vorrichtung zur Durchführung eines Verfahrens für die Herstellung von Schwefelsäure. Nachfolgend wird die erfindungsgemäße Vorrichtung zunächst anhand der Ausführungsform nach Fig. 1 näher erläutert.
Die Vorrichtung weist eine erste Oxidationseinrichtung 1 für die Oxidation bzw. Verbrennung von Schwefel zu Schwefeldioxid auf. Hierzu ist eine Luftzuführungsvorrichtung 2 sowie eine Schwefelzuführung 3 für die Zuführung von Luft und Schwefel an die erste Oxidationseinrichtung 1 angeschlossen. Es liegt im Rahmen der Erfindung, dass die erste Oxidationseinrichtung 1 sowie die Luftzuführungsvorrichtung 2 und die Schwefelzuführung 3 lediglich im Produktionsmodus der Vorrichtung aktiv sind. Die mit der Luftzuführungsvorrichtung 2 zugeführte Luft wird im Produktionsmodus über die Luftzuführungsleitung 25 und das geöffnete Luftzuführungs-Ventil 19 in die Lufttrocknungseinrichtung 24 eingeführt und von dort unter Zuhilfenahme des Gebläses 23 in die erste Oxidationseinrichtung 1 gefördert. Die Lufttrocknungseinrichtung 24 ist im Ausführungsbeispiel als Lufttrocknungsturm ausgebildet.

Im Produktionsmodus wird das in der ersten Oxidationseinrichtung 1 gebildete Schwefeldioxid in die in Form eines Konverters mit Katalysatorböden 5 ausgebildete zweite Oxidationseinrichtung 4 eingeleitet, wobei das Schwefeldioxid in diesem Konverter katalytisch zu Schwefeltrioxid (SO₃) oxidiert wird. Vorzugsweise und im Ausführungsbeispiel weist die zweite Oxidationseinrichtung 4 bzw. der Konverter zwei Konverterstufen 6, 7 auf. Im Ausführungsbeispiel wird das Schwefeldioxid zunächst durch die erste Konverterstufe 6 geführt, die hier drei Katalysatorböden 5 aufweist. Nach Durchströmen der ersten Konverterstufe 6 wird das Prozessgas im Produktionsmodus bevorzugt und im Ausführungsbeispiel über eine Prozessgas-Abführungsleitung 8 in die Zwischen-Absorptionseinrichtung 9 eingeführt. Im Ausführungsbeispiel wird hier das SO₃-haltige Prozessgas im Gegenstrom zu verdünnter Schwefelsäure geführt, so dass Schwefeltrioxid von der Schwefelsäure absorbiert wird und die Schwefelsäure dadurch gleichsam aufkonzentriert wird. Das verbleibende Prozessgas wird dann zweckmäßigerweise und im Ausführungsbeispiel über die Prozessgas-Zuführungsleitung 10 wieder in die zweite Oxidationseinrichtung 4 eingeführt, und zwar in deren zweiten Konverterstufe 7. Nach Durchströmen dieser zweiten Konverterstufe 7 - in der verbleibendes Schwefeldioxid zu Schwefeltrioxid oxidiert wird - wird das Prozessgas dann empfohlenermaßen und im Ausführungsbeispiel über die Verbindungsleitung 11 in die End-Absorptionseinrichtung 12 eingeführt. Auch hier wird das Prozessgas zweckmäßigerweise im Gegenstrom zu verdünnter Schwefelsäure geführt, so dass Schwefeltrioxid von der Schwefelsäure absorbiert wird. Das verbleibende Prozessgas wird vorzugsweise und im Ausführungsbeispiel am oberen Ende der End-Absorptionseinrichtung 12 abgeführt, und zwar im Produktionsmodus über eine verschließbare Ausschleusungsleitung 13 aus dem Prozess bzw. aus der Vorrichtung ausgeschleust.

Zur Realisierung des erfindungsgemäßen Standby-Modus ist die End-Absorptionseinrichtung 12 über eine Prozessgasleitung 14 mit der Erwärmungseinrichtung 15 zur Erwärmung des Prozessgases verbunden. Die Erwärmungseinrichtung 15 ist wiederum über eine Anschlussleitung 16 an die zweite Oxidationseinrichtung 4 bzw. an die erste Konverterstufe 6 der zweiten Oxidationseinrichtung 4 angeschlossen. Bevorzugt und im Ausführungsbeispiel wird zur Realisierung des Standby-Modus weiterhin die Prozessgas-Abführungsleitung 8 mit der Prozessgas-Zuführungsleitung 10 vor der Zwischen-Absorptionseinrichtung 9 über eine verschließbare Bypass-Leitung 17 kurzgeschlossen. Die Bypass-Leitung 17 ist dabei mittels des Bypass-Ventils 18 verschließbar.

Für ein Umschalten aus dem Produktionsmodus in den Standby-Modus wird zunächst das Luftzuführungs-Ventil 19 für die Luftzuführung zu der ersten Oxidationseinrichtung 1 geschlossen. Weiterhin wird die Ausschleusungsleitung 13 mit dem Ausschleusungs-Ventil 20 verschlossen. Stattdessen wird das Prozessgasleitungs-Ventil 21 geöffnet, so dass Prozessgas aus der End-Absorptionseinrichtung 12 über die Leitung 22 der Erwärmungseinrichtung 15 zugeführt werden kann. Zur Unterstützung dieser Prozessgasführung wird bevorzugt und im Ausführungsbeispiel das im Produktionsmodus für die Luftzuführung vorgesehene Gebläse 23 aktiviert. In der Erwärmungseinrichtung 15 wird das Prozessgas beispielsweise auf eine Temperatur von etwa 500 °C erwärmt. Das auf diese Weise erwärmte Prozessgas wird dann über die Anschlussleitung 16 der zweiten Oxidationseinrichtung 4 bzw. der ersten Konverterstufe 6 der zweiten Oxidationseinrichtung 4 zugeführt. Hier durchströmt das Prozessgas die erste Konverterstufe 6 und wird danach über die Prozessgas-Abführungsleitung 8 aus der zweiten Oxidationseinrichtung 4 geführt. Im Standby-Modus ist das Bypass-Ventil 18 der Bypass-Leitung 17 geöffnet und somit strömt das Prozessgas aus der Prozessgas-Abführungsleitung 8 unter Umgehung der Zwischen-Absorptionseinrichtung 9 über die Bypass-Leitung 17 zur Prozessgas-Zuführungsleitung 10. Mit dieser Prozessgas-Zuführungsleitung 10 wird das Prozessgas wiederum der zweiten Oxidationseinrichtung 4 bzw. der zweiten Konverterstufe 7 dieser zweiten Oxidationseinrichtung 4 zugeführt. Nach Durchströmen der zweiten Konverterstufen 7 gelangt das Prozessgas über die Verbindungsleitung 11 in die End-Absorptionseinrichtung 12. Hier werden im Prozessgas verbliebene Reste von Schwefeltrioxid und Wasser absorbiert. Im Unterschied zum Produktionsmodus wird das Prozessgas dann bei verschlossenem Ausschleusungs-Ventil 20 über die Prozessgasleitung 14 bei geöffnetem Prozessgasleitungs-Ventil 21 über das Gebläse 23 zur Erwärmungseinrichtung 15 zurückgeführt und auf diese Weise weiterhin im Kreislauf geführt. Es liegt im Rahmen der Erfindung, dass das Prozessgas sukzessive durch Stickstoff ersetzt wird.

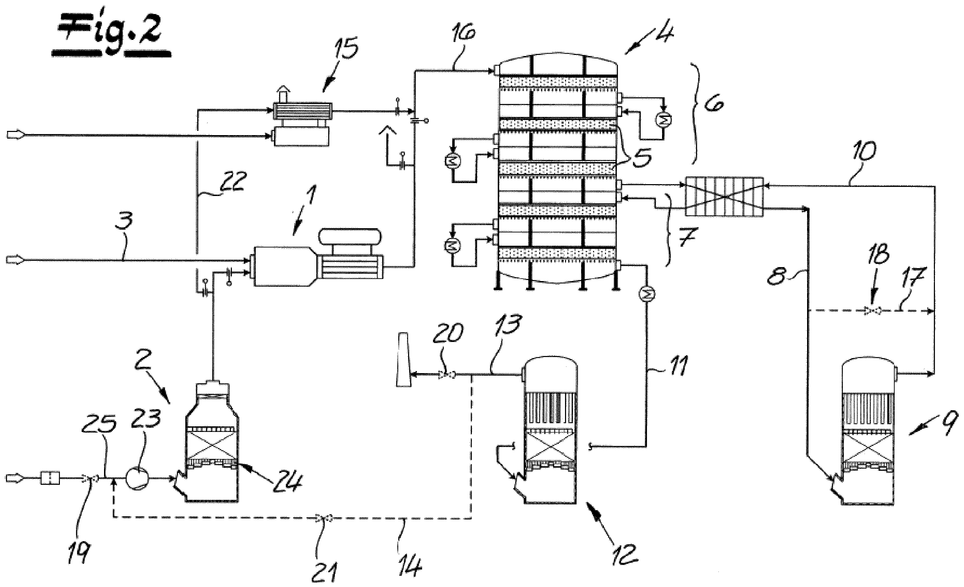

Die Vorrichtung in der Ausführungsform gemäß Fig. 2 arbeitet grundsätzlich wie die in Fig. 1 dargestellte Vorrichtung. Der wesentliche Unterschied gegenüber dem Ausführungsbeispiel aus Fig. 1 besteht in der Verbindung der an die End-Absorptionseinrichtung 12 angeschlossenen Prozessgasleitung 14. Für ein Umschalten aus dem Produktionsmodus in den Standby-Modus wird auch bei dieser Ausführungsform zunächst das Luftzuführungs-Ventil 19 für die Luftzuführung zu der ersten Oxidationseinrichtung 1 geschlossen und es wird die Ausschleusungsleitung 13 mit dem Ausschleusungs-Ventil 20 verschlossen. Das Prozessgasleitungs-Ventil 21 wird auch hier geöffnet, so dass Prozessgas aus der End-Absorptionseinrichtung 12 über die Leitung 22 der Erwärmungseinrichtung 15 zugeführt werden kann. Allerdings wird das Prozessgas im Standby-Modus der Ausführungsform nach Fig. 2 über die Prozessgasleitung 14 bei geöffnetem Prozessgasleitungs-Ventil 21 in die vor der Lufttrocknungseinrichtung 24 angeordnete Luftzuführungsleitung 25 eingeführt. Bei dieser Ausführungsform ist auch das Gebläse 23 in Strömungsrichtung vor der Lufttrocknungseinrichtung 24 angeordnet. Bei geschlossenem Luftzuführungs-Ventil 19 wird das Prozessgas mittels des Gebläses 23 durch die Lufttrocknungseinrichtung 24 geführt und von dort aus weiter über die Leitung 22 zu der Erwärmungseinrichtung 15 geführt.

## Patentansprüche

1. Verfahren zur Herstellung von Schwefelsäure, wobei in einem Produktionsmodus des Verfahrens Schwefel in einer ersten Oxidationsstufe zu Schwefeldioxid oxidiert wird, wobei das Schwefeldioxid in einer zweiten Oxidationsstufe katalytisch zu Schwefeltrioxid oxidiert wird und wobei das Schwefeltrioxid in zumindest eine Absorptionsstufe zur Absorption des Schwefeltrioxids eingeleitet wird, wobei Prozessgase aus der in Strömungsrichtung letzten Absorptionsstufe ausgeschleust werden,
wobei in einem Standby-Modus des Verfahrens zumindest eine - vorzugsweise in Strömungsrichtung der Prozessgase vor der zweiten Oxidationsstufe angeordnete - Erwärmungsstufe zur Erwärmung der Prozessgase zugeschaltet wird, wobei die aus der Absorptionsstufe austretenden Prozessgase zu der Erwärmungsstufe geleitet bzw. zurückgeleitet werden und wobei die Prozessgase über die Erwärmungsstufe, die zweite Oxidationsstufe und die zumindest eine Absorptionstufe im Kreislauf geführt werden.

2. Verfahren nach Anspruch 1, wobei im Produktionsmodus der ersten Oxidationsstufe Schwefel und Luft für die Oxidation des Schwefels zugeführt werden, wobei im Standby-Modus die Schwefelzufuhr eingestellt wird und die Luftzufuhr zumindest gedrosselt, vorzugsweise eingestellt wird.

3. Verfahren nach einem der Ansprüche 1 oder 2, wobei im Standby-Modus die Prozessgase von der Absorptionsstufe unter Umgehung der ersten Oxidationsstufe zur Erwärmungsstufe und von dort zur zweiten Oxidationsstufe geführt werden.

4. Verfahren nach einem der Ansprüche 1 bis 3, wobei die Prozessgase nach Durchlaufen eines Teils der zweiten Oxidationsstufe aus der zweiten Oxidationsstufe ausgeschleust werden und im Produktionsmodus des Verfahrens durch zumindest eine Zwischen-Absorptionsstufe geführt werden sowie anschließend zur zweiten Oxidationsstufe zwecks Durchlaufens eines weiteren Teils dieser zweiten Oxidationsstufe zurückgeführt werden und wobei im Standby-Modus des Verfahrens die aus der zweiten Oxidationsstufe ausgeschleusten Prozessgase über eine verschließbare Bypass-Leitung unter Umgehung der Zwischen-Absorptionsstufe zu der zweiten Oxidationsstufe zurückgeführt werden.

5. Verfahren nach einem der Ansprüche 1 bis 4, wobei die Prozessgase sowohl im Produktionsmodus als auch im Standby-Modus des Verfahrens nach Durchlaufen des weiteren bzw. zweiten Teils der zweiten Oxidationsstufe in die Absorptionsstufe bzw. in die End-Absorptionsstufe eingeführt werden.

6. Verfahren nach einem der Ansprüche 1 bis 5, wobei im Standby-Modus des Verfahrens die Ausschleusung der Prozessgase aus der in Strömungsrichtung letzten Absorptionsstufe bzw. aus der Endabsorptionsstufe zumindest gedrosselt, vorzugsweise unterbunden wird und wobei die Prozessgase stattdessen in die Erwärmungsstufe eingeführt werden.

7. Vorrichtung zur Herstellung von Schwefelsäure, insbesondere zur Durchführung des Verfahrens nach einem der Ansprüche 1 bis 6, wobei eine erste Oxidationseinrichtung für die Erzeugung von Schwefeldioxid sowie eine daran angeschlossene zweite Oxidationseinrichtung zur Oxidation des Schwefeldioxids zu Schwefeltrioxid vorgesehen ist, wobei an die zweite Oxidationseinrichtung zumindest eine Absorptionsvorrichtung für die Absorption des Schwefeltrioxids angeschlossen ist, wobei die in Strömungsrichtung des Prozessgases letzte Absorptionsvorrichtung (End-Absorptionsvorrichtung) für das aus der Absorptionsvorrichtung abgeführte Prozessgas zumindest eine verschließbare Ausschleusungsleitung sowie zumindest eine verschließbare Prozessgasleitung aufweist,
wobei in einem Produktionsmodus der Vorrichtung die Ausschleusungsleitung geöffnet und die Prozessgasleitung geschlossen ist und wobei in einem Standby-Modus der Vorrichtung die Ausschleusungsleitung verschlossen und die Prozessgasleitung für eine Kreislaufführung der Prozessgase geöffnet ist, wobei die Prozessgasleitung mit einer Erwärmungseinrichtung zur Erwärmung der Prozessgase verbunden ist und wobei die Erwärmungseinrichtung über eine Anschlussleitung an die zweite Oxidationseinrichtung angeschlossen ist, so dass im Standby-Modus der Vorrichtung erwärmte Prozessgase aus der Erwärmungseinrichtung in die zweite Oxidationseinrichtung einführbar ist.

8. Vorrichtung nach Anspruch 7, wobei zumindest ein Gebläse vorgesehen ist, wobei im Produktionsmodus mit dem Gebläse der ersten Oxidationseinrichtung Sauerstoff bzw. Luft zur Oxidation des Schwefels zuführbar ist und wobei im Standby-Modus mit dem Gebläse Prozessgase aus der Prozessgasleitung zur Erwärmungseinrichtung förderbar sind.

9. Vorrichtung nach einem der Ansprüche 7 oder 8, wobei die zweite Oxidationseinrichtung als mehrstufiger, insbesondere zweistufiger Konverter ausgebildet ist, wobei jede Konverterstufe zumindest einen Katalysatorboden, bevorzugt eine Mehrzahl von Katalysatorböden aufweist, wobei eine erste Konverterstufe über zumindest eine Prozessgas-Abführungsleitung mit zumindest einer Zwischen-Absorptionseinrichtung verbunden ist und wobei die Zwischen-Absorptionseinrichtung über zumindest eine Prozessgas-Zuführungsleitung mit einer zweiten Konverterstufe der zweiten Oxidationseinrichtung verbunden ist, so dass im Produktionsmodus Prozessgase aus der ersten Konverterstufe der zweiten Oxidationseinrichtung durch die Zwischenabsorptionseinrichtung in die zweite Konverterstufe einführbar sind.

10. Vorrichtung nach Anspruch 9, wobei die Prozessgas-Abführungsleitung und die Prozessgas-Zuführungsleitung über eine verschließbare Bypass-Leitung miteinander verbunden sind, wobei im Standby-Modus der Vorrichtung die Bypass-Leitung geöffnet ist, so dass Prozessgase aus der ersten Konverterstufe über die Bypass-Leitung - unter Umgehung der Zwischen-Absorptionseinrichtung - in die zweite Konverterstufe der zweiten Oxidationseinrichtung einführbar sind.

## Claims

1. A process for preparing sulfuric acid, wherein, in a production mode of the process, sulfur is oxidized to sulfur dioxide in a first oxidation stage, the sulfur dioxide is catalytically oxidized to sulfur trioxide in a second oxidation stage and the sulfur trioxide is introduced into at least one absorption stage for absorption of the sulfur trioxide, with process gases being discharged from the last absorption stage in the flow direction,
and in a standby mode of the process, at least one heating stage, preferably arranged upstream of the second oxidation stage in the flow direction of the process gases, for heating the process gases is connected in, with the process gases exiting from the absorption stage being fed or recirculated to the heating stage and the process gases being circulated via the heating stage, the second oxidation stage and the at least one absorption stage.

2. The process as claimed in claim 1, wherein, in the production mode sulfur and air for the oxidation of the sulfur are fed to the first oxidation stage, and, in the standby mode, the introduction of sulfur is stopped and the introduction of air is at least throttled back, preferably stopped.

3. The process as claimed in either claim 1 or 2, wherein, in the standby mode, the process gases are conveyed from the absorption stage with bypassing of the first oxidation stage to the heating stage and from there to the second oxidation stage.

4. The process as claimed in any of claims 1 to 3, wherein the process gases are, after passing through part of the second oxidation stage, discharged from the second oxidation stage and, in the production mode of the process, conveyed through at least one intermediate absorption stage and are subsequently recirculated to the second oxidation stage for the purpose of passing through a further part of this second oxidation stage and, in the standby mode of the process, the process gases discharged from the second oxidation stage are recirculated via a closeable bypass conduit to the second oxidation stage with bypassing of the intermediate absorption stage.

5. The process as claimed in any of claims 1 to 4, wherein the process gases are, after passing through the further or second part of the second oxidation stage, introduced into the absorption stage or into the final absorption stage, both in the production mode and in the standby mode of the process.

6. The process as claimed in any of claims 1 to 5, wherein, in the standby mode of the process, the discharge of the process gases from the last absorption stage in the flow direction or from the final absorption stage is at least throttled back, preferably stopped, and the process gases are instead introduced into the heating stage.

7. An apparatus for preparing sulfuric acid, in particular for carrying out the process as claimed in any of claims 1 to 6, wherein a first oxidation facility for producing sulfur dioxide and also a second oxidation facility connected thereto for oxidation of the sulfur dioxide to sulfur trioxide is provided and at least one absorption apparatus for the absorption of the sulfur trioxide is connected to the second oxidation facility, with the last absorption apparatus in the flow direction of the process gas (final absorption apparatus) for the process gas discharged from the absorption apparatus having at least one closeable discharge conduit and at least one closeable process gas conduit,
with the discharge conduit being opened and the process gas conduit being closed in a production mode of the apparatus and the discharge conduit being closed and the process gas conduit being opened for circulation of the process gases in a standby mode of the apparatus, with the process gas conduit being connected to a heating device for heating the process gases and the heating device being connected via a connecting line to the second oxidation facility, so that heated process gases from the heating device can be introduced into the second oxidation facility in the standby mode of the apparatus.

8. The apparatus as claimed in claim 7, wherein at least one blower is provided and, in the production mode, oxygen or air for oxidation of the sulfur can be introduced by means of the blower into the first oxidation facility and, in the standby mode, process gases can be conveyed by means of the blower from the process gas conduit to the heating device.

9. The apparatus as claimed in either claim 7 or 8, wherein the second oxidation facility is configured as a multistage, in particular two-stage, convertor, with each convertor stage comprising at least one catalyst tray, preferably a plurality of catalyst trays, a first convertor stage being connected via at least one process gas discharge conduit to at least one intermediate absorption apparatus and the intermediate absorption apparatus being connected via at least one process gas feed conduit to a second convertor stage of the second oxidation facility, so that process gases from the first convertor stage of the second oxidation facility can be introduced via the intermediate absorption apparatus into the second convertor stage in the production mode.

10. The apparatus as claimed in claim 9, wherein the process gas discharge conduit and the process gas feed conduit are connected to one another via a closeable bypass conduit, with the bypass conduit being open in the standby mode of the apparatus so that process gases from the first convertor stage can be introduced via the bypass conduit, with bypassing of the intermediate absorption apparatus, into the second convertor stage of the second oxidation facility.

## Revendications

1. Procédé de fabrication d'acide sulfurique, dans lequel, dans un mode de production du procédé, du soufre est oxydé dans une première étape d'oxydation en dioxyde de soufre, dans lequel le dioxyde de soufre est oxydé catalytiquement en trioxyde de soufre dans une deuxième étape d'oxydation et dans lequel le trioxyde de soufre est introduit dans au moins une étape d'absorption pour l'absorption du trioxyde de soufre, dans lequel des gaz de procédé issus de la dernière étape d'absorption dans la direction d'écoulement sont évacués,
dans lequel, dans un mode de veille du procédé, au moins une étape de chauffage, de préférence agencée avant la deuxième étape d'oxydation dans la direction d'écoulement des gaz de procédé, est activée pour le chauffage des gaz de procédé, dans lequel les gaz de procédé sortant de l'étape d'absorption sont conduits ou reconduits dans l'étape de chauffage et dans lequel les gaz de procédé sont mis en circulation par l'intermédiaire de l'étape de chauffage, de la deuxième étape d'oxydation et de ladite au moins une étape d'absorption.

2. Procédé selon la revendication 1, dans lequel, dans le mode de production, du soufre et de l'air sont introduits dans la première étape d'oxydation pour l'oxydation du soufre, dans lequel, dans le mode de veille, l'introduction de soufre est ajustée et l'introduction d'air est au moins réduite, de préférence ajustée.

3. Procédé selon l'une quelconque des revendications 1 ou 2, dans lequel, dans le mode de veille, les gaz de procédé sont acheminés à partir de l'étape d'absorption en contournant la première étape d'oxydation jusqu'à l'étape de chauffage et depuis celle-ci jusqu'à la deuxième étape d'oxydation.

4. Procédé selon l'une quelconque des revendications 1 à 3, dans lequel les gaz de procédé sont évacués de la deuxième étape d'oxydation après la traversée d'une partie de la deuxième étape d'oxydation et, dans le mode de production du procédé, sont acheminés au travers d'au moins une étape d'absorption intermédiaire, puis recyclés dans la deuxième étape d'oxydation pour la traversée d'une autre partie de cette deuxième étape d'oxydation, et dans lequel, dans le mode de veille du procédé, les gaz de procédé évacués à partir de la deuxième étape d'oxydation sont recyclés dans la deuxième étape d'oxydation par l'intermédiaire d'une conduite de dérivation pouvant être fermée en contournant l'étape d'absorption intermédiaire.

5. Procédé selon l'une quelconque des revendications 1 à 4, dans lequel, aussi bien dans le mode de production que dans le mode de veille du procédé, les gaz de procédé sont introduits après la traversée de l'autre ou de la deuxième partie de la deuxième étape d'oxydation dans l'étape d'absorption ou dans l'étape d'absorption finale.

6. Procédé selon l'une quelconque des revendications 1 à 5, dans lequel, dans le mode de veille du procédé, l'évacuation des gaz de procédé à partir de la dernière étape d'absorption dans la direction d'écoulement ou à partir de l'étape d'absorption finale est au moins réduite, de préférence cessée, et dans lequel les gaz de procédé sont plutôt introduits dans l'étape de chauffage.

7. Dispositif pour la fabrication d'acide sulfurique, notamment pour la réalisation du procédé selon l'une quelconque des revendications 1 à 6, dans lequel un premier appareil d'oxydation pour la génération de dioxyde de soufre, ainsi qu'un deuxième appareil d'oxydation raccordé à celui-ci pour l'oxydation du dioxyde de soufre en trioxyde de soufre sont prévus, dans lequel au moins un dispositif d'absorption pour l'absorption du trioxyde de soufre est raccordé au deuxième appareil d'absorption, dans lequel le dernier dispositif d'absorption (dispositif d'absorption final) dans la direction d'écoulement du gaz de procédé pour le gaz de procédé déchargé du dispositif d'absorption comprend au moins une conduite d'évacuation pouvant être fermée, ainsi qu'au moins une conduite de gaz de procédé pouvant être fermée,
dans lequel, dans un mode de production du dispositif, la conduite d'évacuation est ouverte et la conduite de gaz de procédé est fermée et dans lequel, dans un mode de veille du dispositif, la conduite d'évacuation est fermée et la conduite de gaz de procédé est ouverte pour une mise en circulation des gaz de procédé, dans lequel la conduite de gaz de procédé est reliée avec un appareil de chauffage pour le chauffage des gaz de procédé, et dans lequel l'appareil de chauffage est raccordé par l'intermédiaire d'une conduite de raccordement au deuxième appareil d'oxydation, de telle sorte que, dans le mode de veille du dispositif, des gaz de procédé chauffés puissent être introduits à partir de l'appareil de chauffage dans le deuxième appareil d'oxydation.

8. Dispositif selon la revendication 7, dans lequel au moins un ventilateur est prévu, dans lequel, dans le mode de production, de l'oxygène ou de l'air pour l'oxydation du soufre peut être introduit avec le ventilateur dans le premier appareil d'oxydation, et dans lequel, dans le mode de veille, des gaz de procédé peuvent être transportés avec le ventilateur à partir de la conduite de gaz de procédé jusqu'à l'appareil de chauffage.

9. Dispositif selon l'une quelconque des revendications 7 ou 8, dans lequel, le deuxième appareil d'oxydation est configuré sous la forme d'un convertisseur à plusieurs étages, notamment à deux étages, dans lequel chaque étage de convertisseur comprend au moins un plateau de catalyseur, de préférence une pluralité de plateaux de catalyseur, dans lequel un premier étage de convertisseur est relié par l'intermédiaire d'au moins une conduite de déchargement de gaz de procédé avec au moins un appareil d'absorption intermédiaire, et dans lequel l'appareil d'absorption intermédiaire est relié par l'intermédiaire d'au moins une conduite d'introduction de gaz de procédé avec un deuxième étage de convertisseur du deuxième appareil d'oxydation, de telle sorte que, dans le mode de production, des gaz de procédé issus du premier étage de convertisseur du deuxième appareil d'oxydation puissent être introduits par le biais de l'appareil d'absorption intermédiaire dans le deuxième étage de convertisseur.

10. Dispositif selon la revendication 9, dans lequel la conduite de déchargement de gaz de procédé et la conduite d'introduction de gaz de procédé sont reliées l'une avec l'autre par l'intermédiaire d'une conduite de dérivation pouvant être fermée, dans lequel, dans le mode de veille du dispositif, la conduite de dérivation est ouverte, de telle sorte que des gaz de procédé puissent être introduits à partir du premier étage de convertisseur par l'intermédiaire de la conduite de dérivation, en contournant l'appareil d'absorption intermédiaire, dans le deuxième étage de convertisseur du deuxième appareil d'oxydation.
